# EUROPÄISCHE PATENTSCHRIFT

(11) **EP 1 765 625 B1**
(45) Veröffentlichungstag und Bekanntmachung des Hinweises auf die Patenterteilung: **30.01.2008**
(21) Anmeldenummer: 05740200.0
(22) Anmeldetag: 28.04.2005
(51) Int. Cl.: B60K 15/077, F02M 37/10

(54) **Vorrichtung zum Fördern von Kraftstoff aus einem Vorratsbehälter zu einer Brennkraftmaschine& x9;& x9;& x9;**
Device for transporting fuel from a reservoir to an internal combustion engine
Dispositif destiné à transporter du carburant d'un réservoir à un moteur à combustion interne

(30) Priorität: 04.05.2004 DE 102004021919
(43) Veröffentlichungstag der Anmeldung: 28.03.2007
(73) Patentinhaber: ROBERT BOSCH GMBH, 70442 Stuttgart (DE)
(72) Erfinder: BRAUN, Hans-Peter, 72172 Renfrizhausen (DE); WIELAND, Thomas, 70193 Stuttgart (DE); SIMEK, Petr, 37361 Hrdejovice (CZ); MOTKA, Pavel, 78969 Postrelmov (CZ)
(86) Internationale Anmeldenummer: PCT/EP2005/051937
(87) Internationale Veröffentlichungsnummer: WO 2005/108146

(56) Entgegenhaltungen:
- EP-A- 0 959 242
- EP-A- 1 186 772
- DE-A1- 19 602 082
- "RAV4 USES JET PUMP IN DIVIDED FUEL TANK" MACHINE DESIGN, PENTON/IPC, CLEVELAND, US, Bd. 68, Nr. 4, 22. Februar 1996 (1996-02-22), Seite 33, XP000556027 ISSN: 0024-9114

## Beschreibung

### Stand der Technik

Die Erfindung geht aus von einer Vorrichtung nach der Gattung des Hauptanspruchs. Eine solche Vorrichtung zum Fördern von Kranstoff ist aus der EP 0 959 242 B1 bekannt, mit einem Förderaggregat und einem stromab des Förderaggregates angeordneten Hauptfilter mit einem Filtergehäuse, und mit einer Treibleitung zum Antreiben einer Saugstrahlpumpe. Nachteilig ist, dass die Treibleitung als Einzelteil in der Vorrichtung montiert werden muss. Dadurch sind die Montage- und Herstellungskosten der Vorrichtung vergleichsweise hoch.

### Vorteile der Erfindung

Die erfindungsgemäße Vorrichtung mit den kennzeichnenden Merkmalen des Hauptanspruchs hat demgegenüber den Vorteil, dass auf einfache Art und Weise die Herstellungskosten verringert werden, indem die Treibleitung an dem Filtergehäuse des Hauptfilters ausgebildet ist. Die Treibleitung ist in dem Filtergehäuse einteilig integriert, so dass keine weiteren separaten Förderkanäle zur Saugstrahlpumpe hin montiert werden müssen.

Durch die in den Unteransprüchen aufgeführten Maßnahmen sind vorteilhafte Weiterbildungen und Verbesserungen der im Hauptanspruch angegebenen Vorrichtung möglich.

Gemäß einer vorteilhaften Ausführung weist das Filtergehäuse einen Filtertopf und einen den Filtertopf verschließenden Filterdeckel auf, wobei die Treibleitung an dem Filtertopf und/oder an dem Filterdeckel ausgebildet ist.

Besonders vorteilhaft ist, wenn der Filtertopf auf der dem Filterdeckel zugewandten Stirnseite eine erste Schulter und der Filterdeckel auf der dem Filtertopf zugewandten Stirnseite eine zweite Schulter aufweist, wobei die erste Schulter und die zweite Schulter flanschartig aneinander liegen. Auf diese Weise kann die Treibleitung in den von der ersten Schulter und der zweiten Schulter gebildeten Flansch integriert werden.

Sehr vorteilhaft ist es, wenn ein erster Abschnitt der Treibleitung in der ersten Schulter des Filtertopfes und/oder in der zweiten Schulter des Filterdeckels vorgesehen ist, da die Treibleitung auf diese Weise abschnittsweise zwischen dem Filtertopf und dem Filterdeckel vorgesehen ist und durch das Zusammenfügen des Filtertopfes mit dem Filterdeckel gebildet und abgedichtet wird.

Außerdem vorteilhaft ist, wenn eine Druckleitung vorgesehen ist, die von dem Förderaggregat über ein Rückschlagventil zu der Brennkraftmaschine führt, wobei der erste Abschnitt mit der Druckleitung stromauf des Rückschlagventils verbunden ist. Gemäß dieser vorteilhaften Ausgestaltung ist vorgesehen, dass die Treibleitung ein Drosselelement und/oder einen weiteren Vorfilter aufweist. Das Drosselelement dient der Begrenzung des über die Saugstrahlpumpe fließenden Volumenstroms. Da der Kraftstoff der Treibleitung stromauf des Hauptfilters abgezweigt wurde und daher noch nicht fein gefiltert ist, vermeidet der weitere Vorfilter ein Verstopfen der Düse der Saugstrahlpumpe und/oder des Drosselelementes.

Auch vorteilhaft ist, wenn ein zweiter Abschnitt der Treibleitung am Filtertopf vorgesehen ist, der von der ersten Schulter des Filtertopfes in Richtung eines Topfbodens des Filtertopfes verläuft, da der Filtertopf gemäß dieser Ausführung leicht mittels Spritzgußtechnik herstellbar und entformbar ist.

Des weiteren vorteilhaft ist, wenn der Filterdeckel einen weiteren Abschnitt der Treibleitung aufweist, der von einem stromab des Hauptfilters angeordneten Druckregelventil ausgehend mit dem zweiten Abschnitt der Treibleitung verbunden ist, wobei der erste Abschnitt der Treibleitung mittels einer Schottwand gegenüber dem zweiten Abschnitt dicht abgeschlossen ist. Durch einen Austausch des Filterdeckels und durch Vorsehen einer Schottwand in dem ersten Abschnitt der Treibleitung wird gemäß dieser Ausführung auf einfache Art und Weise eine Änderung der Strömungsführung in der Vorrichtung erreicht. Abhängig von der Auswahl des Filterdeckels ist es somit möglich, die Saugstrahlpumpe direkt mit der Druckleitung stromauf des Hauptfilters oder mittelbar über ein Druckregelventil mit der Druckleitung stromab des Hauptfilters zu verbinden. Auf diese Weise ist das sogenannte Baukastenprinzip umgesetzt, das verschiedene Ausführungen der Vorrichtung mit möglichst vielen Gleichteilen zulässt.

Darüber hinaus vorteilhaft ist, wenn das Förderaggregat einen Ausgangsstutzen aufweist, der in einen Filtereingang des Filtergehäuses hineinragt, da auf diese Weise eine separate Verrohrung von dem Förderaggregat zu dem Filtergehäuse eingespart wird.

Weiter vorteilhaft ist, wenn der Filtereingang über eine Öffnung mit der Treibleitung strömungsverbunden ist.

### Zeichnung

Ausführungsbeispiele der Erfindung sind in der Zeichnung vereinfacht dargestellt und in der nachfolgenden Beschreibung näher erläutert. Es zeigen Fig. 1 schematisch eine Vorrichtung zum Fördern von Kraftstoff gemäß einer ersten Ausführung, Fig.2 schematisch eine Vorrichtung zum Fördern von Kraftstoff gemäß einer zweiten Ausführung, Fig. 3 und Fig.4 eine Vorrichtung zum Fördern von Kraftstoff gemäß der ersten Ausführung und Fig.5 eine Vorrichtung zum Fördern von Kraftstoff gemäß der zweiten Ausführung.

### Beschreibung der Ausführungsbeispiele

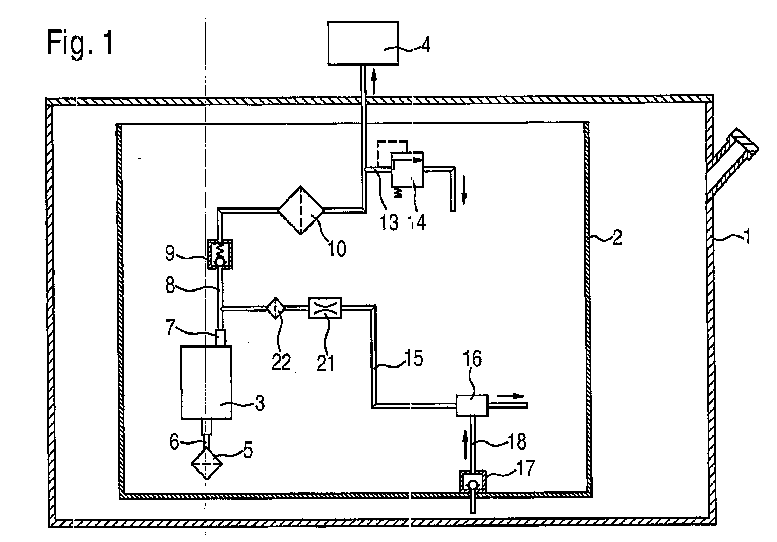

Fig.1 zeigt schematisch eine Vorrichtung zum Fördern von Kraftstoff gemäß einer ersten Ausführung.

Die Vorrichtung dient beispielsweise zum Fördern von Kraftstoff aus einem Vorratsbehälter 1 in einen Speicherbehälter 2 und von dort aus über ein Förderaggregat 3 zu einer Brennkraftmaschine 4 eines Kraftfahrzeugs.

Im Vorratsbehälter 1 ist der Speicherbehälter 2 und in dem Speicherbehälter 2 das Förderaggregat 3 angeordnet. Das Förderaggregat 3 ist beispielsweise eine Strömungspumpe oder eine Verdrängungspumpe.

Der beispielsweise topfförmige Speicherbehälter 2 bevorratet ausreichend viel Kraftstoff, damit eine Kraftstosversorgung der Brennkraftmaschine 4 durch das Förderaggregat 3 sichergestellt ist, auch wenn, beispielsweise durch eine Kurvenfahrt und dadurch bedingte Schwappbewegungen des Kraftstoffs im Vorratsbehälter 1, kein Kraftstoff in den Speicherbehälter 2 gefördert wird.

Das Förderaggregat 3 saugt beispielsweise über einen Vorfilter 5 und eine Ansaugleitung 6 Kraftstoff aus dem Speicherbehälter 2 an und fördert den Kraftstoff über einen Ausgangsstutzen 7 in eine Druckleitung 8, die zu der Brennkraftmaschine 4 führt. Der Vorfilter 5 schützt die Vorrichtung stromab des Vorfilters 5 vor im Kraftstoff enthaltenen groben Schmutzpartikeln.

In der Druckleitung 8 ist ein Rückschlagventil 9 und stromab des Rückschlagventils 9 ein Hauptfilter 10 vorgesehen. Das Rückschlagventil 9 verhindert, dass Kraftstoff bei abgeschaltetem Förderaggregat 3 aus der Druckleitung 8 stromab des Rückschlagventils 9 nach stromauf des Rückschlagventils 9, durch das Förderaggregat 3, die Ansaugleitung 6 und den Vorfilter 5 in den Speicherbehälter 2 zurückläuft. Der Hauptfilter 10 filtert die im Kraftstoff enthaltenen feinen Schmutzpartikeln heraus und schützt auf diese Weise beispielsweise die Einspritzventile der Brennkraftmaschine vor Verstopfung.

Stromab des Hauptfilters 10 zweigt von der Druckleitung 8 eine Überdruckleitung 13 ab, in der ein Druckregelventil 14 vorgesehen ist. Wenn der Druck in der Druckleitung 8 einen vorbestimmten Wert überschreitet, öffnet das Druckregelventil 14 und lässt Kraftstoff aus der Druckleitung 8 über die Überdruckleitung 13 in den Speicherbehälter 2 zurückströmen. Auf diese Weise sinkt der Druck in der Druckleitung 8 wieder unter den vorbestimmten Druck ab und das Druckregelventil 14 schließt wieder.

Stromab des Förderaggregates 3 und stromauf des Rückschlagventils 9 zweigt von der Druckleitung 8 eine Treibleitung 15 ab, die dazu dient, eine sogenannte Saugstrahlpumpe 16 mit Kraftstoff aus der Druckleitung 8 zu versorgen und anzutreiben. Damit der Speicherbehälter 2 nicht von der Förderaggregat 3 leer gesaugt wird, fördert die Saugstrahlpumpe 16 Kraftstoff aus dem Vorratsbehälter 1 über eine Strömungsverbindung in den Speicherbehälter 2, beispielsweise über ein Bodenventil 17 und einen Saugkanal 18. Der angesaugte Kraftstoff wird zusammen mit dem sogenannten Treibstrahl der Treibleitung 15 in den Speicherbehälter 2 gefördert. In der Treibleitung 15 ist ein Drosselelement 21 vorgesehen, um den über die Treibleitung 15 fließenden Volumenstrom festzulegen und zu begrenzen. Damit das Drosselelement 21 nicht verstopfen kann, ist ein weiterer Vorfilter 22 in der Treibleitung 15 stromauf des Drosselelementes 21 vorgesehen.

Eine Saugstrahlpumpe ist beispielsweise aus der DE 198 56 298 C1 bekannt, wobei deren Inhalt ausdrücklich Teil der Offenbarung dieser Anmeldung sein soll.

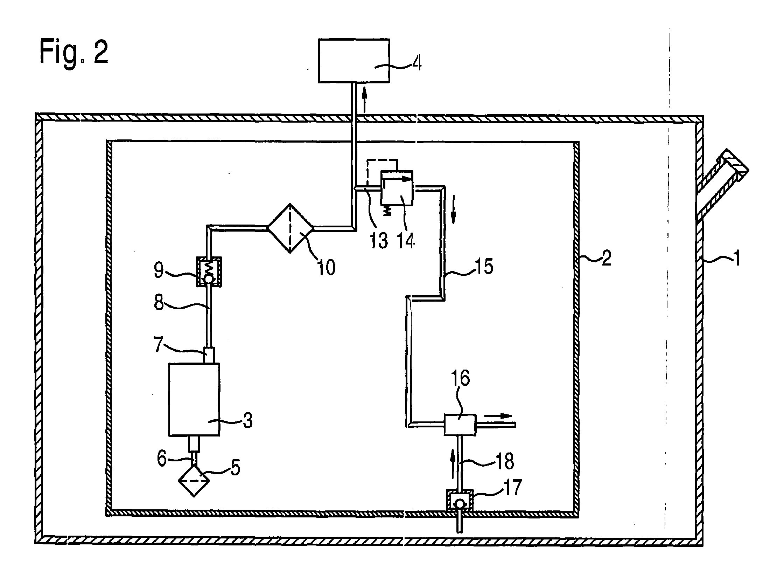

Fig. 2 zeigt schematisch eine Vorrichtung zum Fördern von Kraftstoff gemäß einer zweiten Ausführung.

Bei der Vorrichtung nach Fig.2 sind die gegenüber der Vorrichtung nach Fig. 1 gleichbleibenden oder gleichwirkenden Teile durch die gleichen Bezugszeichen gekennzeichnet.

Die Vorrichtung nach Fig.2 unterscheidet sich von der Vorrichtung nach Fig. 1 darin, dass die Treibleitung 15 von der Druckleitung 8 stromab des Hauptfilters 10 abzweigt. Die Überdruckleitung 13 gemäß der Ausführung nach Fig. 1 bildet gemäß der Ausführung nach Fig.2 stromab des Druckregelventils 14 die Treibleitung 15, in der das Überdruckventil 14 vorgesehen ist.

Der weitere Vorfilter 22 gemäß der ersten Ausführung entfällt, da der Kraftstoff stromab des Hauptfilters 10 bereits durch den Hauptfilter 10 gefiltert ist. Da das Druckregelventil 14 den Volumenstrom der Treibleitung 15 begrenzt, kann das Drosselelement 21 in der zweiten Ausführung entfallen.

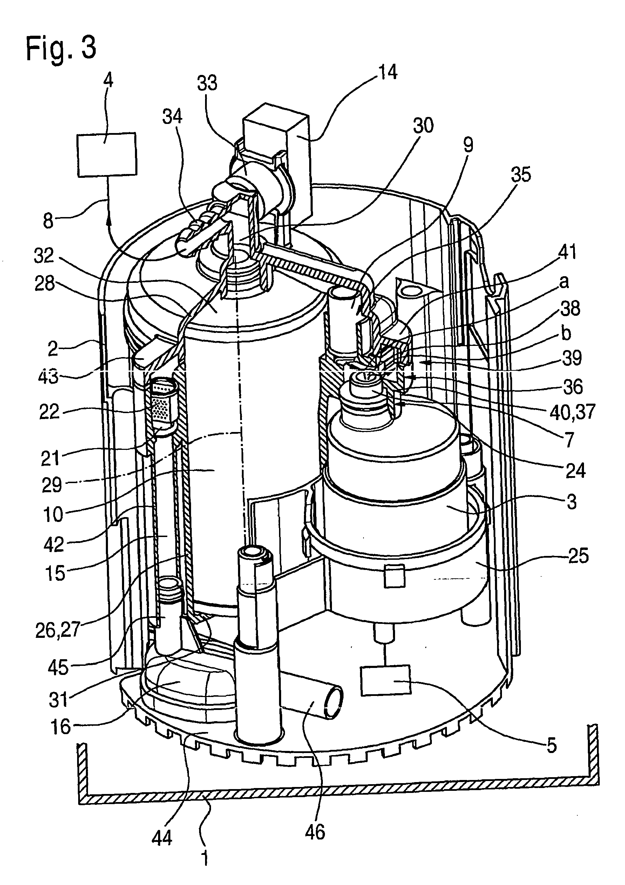

Fig.3 zeigt eine Schnittansicht der erfindungsgemäßen Vorrichtung zum Fördern von Kraftstoff gemäß der ersten Ausführung nach Fig.1.

Bei der Vorrichtung nach Fig.3 sind die gegenüber der Vorrichtung nach Fig.1 und Fig.2 gleichbleibenden oder gleichwirkenden Teile durch die gleichen Bezugszeichen gekennzeichnet.

Das Förderaggregat 3 ist in einer Halterung 25 in dem Speicherbehälter 2 angeordnet

Der im Speicherbehälter 2 angeordnete Hauptfilter 10 ist in einem Filtergehäuse 26 vorgesehen, das beispielsweise einen Filtertopf 27 mit einem Topfboden 31 und einen den Filtertopf 27 verschließenden Filterdeckel 28 aufweist. Das Filtergehäuse 26 ist beispielsweise neben dem Förderaggregat 3 angeordnet.

Das Förderaggregat 3 reicht beispielsweise mit dem Ausgangsstutzen 7 in einen Filtereingang 24 des Filtergehäuses 26. Der Kraftstoff verlässt das Förderaggregat 3 über den Ausgangsstutzen 7 in den Filtereingang 24, der Teil der Druckleitung 8 und dicht gegenüber dem Speicherbehälter 2 ausgeführt ist. In der Druckleitung 8 zwischen dem Ausgangsstutzen 7 und dem Rückschlagventil 9 ist eine Abzweigung 36 mit einem ersten Strömungsweg a und einem zweiten Strömungsweg b vorgesehen. Die Abzweigung 36 ist beispielsweise im Filtereingang 24 angeordnet und führt entlang einem Strömungsweg a über das Rückschlagventil 9 in einen Filterraum 32 des Filtergehäuses 26. Der Strömungsweg b der Abzweigung 36 ist gemäß der ersten Ausführung nach Fig. 1 über eine Öffnung 38 mit der Treibleitung 15 strömungsverbunden. Die Öffnung 38 ist in dem Filtertopf 27 und/oder in dem Filterdeckel 28 vorgesehen.

Das Rückschlagventil 9 ist im Filtergehäuse 26, beispielsweise zwischen dem Filterdeckel 28 und der dem Filterdeckel 28 zugewandten Stirnseite des Filtertopfes 27, in einer mit dem Filtereingang 24 strömungsverbundenen Aussparung 35 des Filtergehäuses 26 angeordnet.

Im Filterraum 32 ist der Hauptfilter 10 angeordnet, der vom Kraftstoffbeispielsweise von radial außen nach radial innen bezüglich einer Filterachse 29 durchströmt wird. Der Kraftstoff verlässt den Filterraum 32 stromab über einen Filterausgang 30 in Richtung der Brennkraftmaschine 4. Der Filterausgang 30 ist als Stutzen ausgebildet und beispielsweise an dem Filterdeckel 28 vorgesehen. An dem Stutzen des Filterausgangs 30 ist beispielsweise ein Ventilanschluss 33 für das Druckregelventil 14 und ein Anschlussstutzen 34 zur Verbindung mit der Brennkraftmaschine 4 vorgesehen. Auf diese Weise ist eine beispielsweise T-förmige Verzweigung gebildet, wobei der eine Zweig zum Druckregelventil 14 und der andere Zweig zu der Brennkraftmaschine 4 führt. Das Druckregelventil 14 ist an dem Ventilanschluss 33 angeordnet, beispielsweise angeklipst, angeschraubt, angesteckt oder angeschweißt.

Erfindungsgemäß ist die Treibleitung 15 an dem Filtergehäuse 26 des Hauptfilters 10 ausgebildet, beispielsweise an dem Filtertopf 27 und/oder an dem Filterdeckel 28 und wird bei deren Herstellung einteilig mitgefertigt. Die Treibleitung 15 ist in dem Filtergehäuse 26 einteilig integriert, so dass keine oder nur wenige separate Strömungsleitungen notwendig sind.

Gemäß einem ersten Ausführungsbeispiel verläuft die Treibleitung 15 in einem beispielsweise teilringförmigen ersten Abschnitt 37 in Umfangsrichtung und in einem zweiten Abschnitt 42 in axialer Richtung bezüglich der Filterachse 29. Der erste Abschnitt 37 und der zweite Abschnitt 42 sind beispielsweise am Außenumfang des Filtergehäuses 26 vorgesehen.

Der erste Abschnitt 37 der Treibleitung 15 ist bezüglich des Strömungsquerschnittes beispielsweise teilweise in dem Filtertopf 27 und teilweise in dem Filterdeckel 28 vorgesehen, wobei sich nach dem Zusammenfügen des Filtertopfes 27 mit dem Filterdeckel 28 ein geschlossener Kanal ergibt. Beispielsweise ist die eine Hälfte des Strömungsquerschnittes des ersten Abschnittes 37 am Filtertopf 27 und die andere Hälfte am Filterdeckel 28 vorgesehen. Der erste Abschnitt 37 kann aber auch derart ausgebildet sein, dass der Strömungskanal des ersten Abschnitts 37 vollständig in dem Filtertopf 27 vorgesehen, aber zu der dem Filterdeckel 28 zugewandten Seite offen ausgebildet ist und dass der Filterdeckel 28 den Strömungskanal an der offenen Seite dicht verschließt. Ebenso kann der erste Abschnitt 37 auch derart ausgebildet sein, dass der Strömungskanal des ersten Abschnitts 37 vollständig in dem Filterdeckel 28 vorgesehen, aber zu der dem Filtertopf 27 zugewandten Seite offen ausgebildet ist und dass der Filtertopf 27 den Strömungskanal an der offenen Seite dicht verschließt.

Der Filtertopf 27 und der Filterdeckel 28 sind beispielsweise mittels Kleben, Schweißen, Klipsen, Schrauben oder anderer Fügearten verbunden.

Der Filtertopf 27 und der Filterdeckel 28 sind beispielsweise an einer Fügefläche 39 flanschartig ausgebildet, wobei der Filtertopf 27 an seiner dem Filterdeckel 28 zugewandten offenen Stirnseite eine erste Schulter 40 und der Filterdeckel 28 eine dem Filtertopf 27 zugewandte zweite Schulter 41 aufweist. Nach dem Fügen des Filtertopfes 27 mit dem Filterdeckel 28 liegen die erste Schulter 40 und die zweite Schulter 41 dicht aneinander an.

Die erste Schulter 40 und die zweite Schulter 41 verlaufen beispielsweise in Umfangsrichtung bezüglich der Filterachse 29 über zumindest einen Teil des Umfangs des Filtergehäuses 26. Die Schultern 40,41 sind daher zumindest teilringförmig ausgeführt, wobei sie im Bereich des Filtereingangs 24 beispielsweise um den Ausgangsstutzen 7 des Förderaggregates 3 und den Filtereingang 24 herum verlaufen und einen zweiten Teilring bilden.

Der erste Abschnitt 37 der Treibleitung 15 ist beispielsweise in der ersten Schulter 40 und/oder in der zweiten Schulter 41 gebildet.

Der Strömungsquerschnitt des ersten Abschnitts 37 der Treibleitung 15 ist beispielsweise viereckig, rechtwinklig, vieleckig, kreisförmig oder oval ausgebildet.

Der mit dem ersten Abschnitt 37 strömungsverbundene zweite Abschnitt 42 der Treibleitung 15 ist beispielsweise nur an dem Filtertopf 27 ausgebildet und verläuft von der ersten Schulter 40 ausgehend, beispielsweise geradlinig und quer zum ersten Abschnitt 37, in Richtung des Topfbodens 31.

Die zweite Schulter 41 des Filterdeckels 28 hat im Bereich des Übergangs zum zweiten Abschnitt 42 der Treibleitung 15 beispielsweise eine Ausbuchtung 43, die radial nach außen gerichtet ist und das dem Filterdeckel 28 zugewandte Ende des zweiten Abschnitts 42 der Treibleitung 15 überdeckt und dicht verschließt. Die Form und Größe der Ausbuchtung 43 ist der Form des zweiten Abschnitts 42 der Treibleitung 15 angepasst.

Der Strömungsquerschnitt des zweiten Abschnitts 42 der Treibleitung 15 ist beispielsweise kreisförmig ausgebildet, kann aber auch viereckig, rechtwinklig, vieleckig oder oval sein.

In dem zweiten Abschnitt 42 der Treibleitung 15, beispielsweise an dem dem ersten Abschnitt 37 zugewandten Ende, ist beispielsweise der weitere Vorfilter 22 und stromab des weiteren Vorfilters 22 das Drosselelement 21 angeordnet. Der weitere Vorfilter 22 und das Drosselelement 21 sind beispielsweise einteilig miteinander verbunden.
Das dem Topfboden 31 zugewandte Ende des zweiten Abschnitts 42 der Treibleitung 15 ist mit einem Eingangsanschluss 45 der Saugstrahlpumpe 16 dicht verbunden.

Die Saugstrahlpumpe 16 ist beispielsweise an einem Boden 44 des Speicherbehälters 2 angeordnet und saugt Kraftstoff aus dem-Vorratsbehälter 1 an und fördert diesen zusammen mit dem Kraftstoff der Treibleitung 15 über einen Mischkanal 46 in den Speicherbehälter 2.

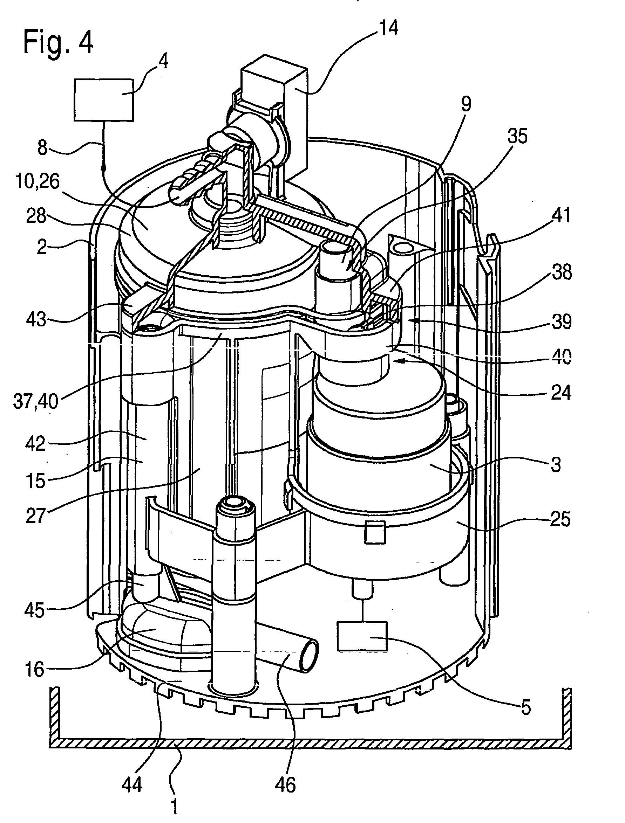

Fig.4 zeigt eine zweite Schnittansicht der erfindungsgemäßen Vorrichtung zum Fördern von Kraftstoff gemäß der Ausführung nach Fig.1.

Bei der Vorrichtung nach Fig.4 sind die gegenüber der Vorrichtung nach Fig. 1 bis Fig.3 gleichbleibenden oder gleichwirkenden Teile durch die gleichen Bezugszeichen gekennzeichnet.

In Fig. 4 ist der ringförmige Verlauf des ersten Abschnitts 37 der Treibleitung 15 dargestellt

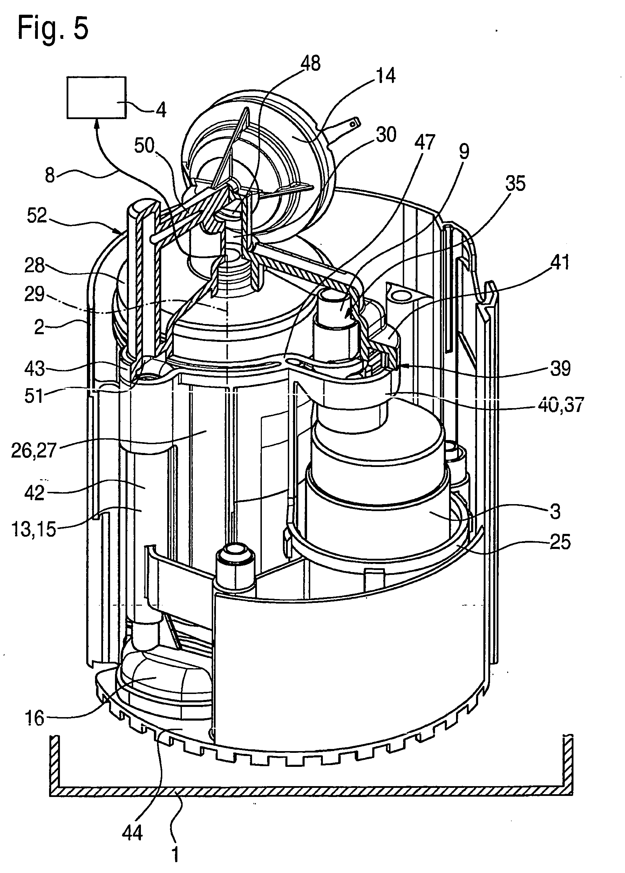

Fig. 5 zeigt eine Schnittansicht der erfindungsgemäßen Vorrichtung zum Fördern von Kraftstoff gemäß der Ausführung nach Fig.2.

Bei der Vorrichtung nach Fig. 5 sind die gegenüber der Vorrichtung nach Fig. 1 bis Fig.4 gleichbleibenden oder gleichwirkenden Teile durch die gleichen Bezugszeichen gekennzeichnet.

Die Vorrichtung nach Fig. 5 unterscheidet sich von der Vorrichtung nach Fig.3 und Fig.4 darin, dass die Treibleitung 15 von der Druckleitung 8 stromab des Hauptfilters 10 abzweigt, wobei das Überdruckventil 14 Kraftstoff in die Treibleitung 15 abströmen lässt, sobald der Druck in der Druckleitung 8 einen vorbestimmten Wert überschreitet.

Aufgrund der anderen Strömungsführung wird gemäß dem zweiten Ausführungsbeispiel ein anderer Filterdeckel 28 als bei der ersten Ausführung nach Fig.3 und Fig.4, aber beispielsweise der gleiche Filtertopf 27 wie in der ersten Ausführung nach Fig. 3 und Fig.4 verwendet. Dies entspricht der Umsetzung des sogenannten Baukastenprinzips, bei dem für verschiedene Ausführungen möglichst viele Gleichteile verwendet werden.

Erfindungsgemäß wird die andere Strömungsführung gemäß Fig.5 im wesentlichen durch den Austausch des Filterdeckels 28 erreicht, es kann aber auch vorgesehen sein, dass weitere und/oder andere Teile unterschiedlich sind.

Damit bei der zweiten Ausführung kein Kraftstoff über den ersten Abschnitt 37 direkt in den zweiten Abschnitt 42 der Treibleitung 15 strömen kann, ist bei der Ausführung nach Fig. 5 beispielsweise die Öffnung 38 zur Treibleitung 15 verschlossen oder der erste Abschnitt 37 der Treibleitung 15 mittels einer in dem ersten Abschnitt 37 angeordneten Schottwand 47 gegenüber dem zweiten Abschnitt 42 der Treibleitung 15 dicht verschlossen.

Am Filterausgang 30 des Filterdeckels 28 ist gemäß der zweiten Ausführung neben dem in Fig.5 nicht dargestellten Anschlussstutzen für die Verbindung zur Brennkraftmaschine 4 ein Druckregelventil 14, beispielsweise ein Membrandruckregler, angeordnet. Der Druck des Filterausgangs 30 wirkt über einen Ventileingang 48 auf einen nicht dargestellten Ventilschließkörper, beispielsweise eine Membran, des Druckregelventils 14. Übersteigt der Druck im Filterausgang 30 einen vorbestimmten Wert, öffnet das Druckregelventil 14 und lässt Kraftstoff aus dem Filterausgang 30 über den Ventileingang 48 und einen nicht dargestellten Ventilsitz in einen weiteren Abschnitt 50 der Treibleitung 13,15 abströmen.

Der weitere Abschnitt 50 der Treibleitung 13,15 verläuft beispielsweise von dem mit dem Ventilschließkörper zusammenwirkenden Ventilsitz ausgehend radial bezüglich der Filterachse 29 nach außen, beispielsweise geradlinig. Nach einer Umlenkung 52 des weiteren Abschnittes 50, die beispielsweise 90 Grad beträgt, verläuft der weitere Abschnitt 50 in axialer Richtung und ist an seinem dem Filtertopf 27 zugewandten Ende an der Ausbuchtung 43 angeordnet. Die Ausbuchtung 43 des Filterdeckels 28, die gemäß der ersten Ausführung nach Fig. 3 und Fig. 4 den zweiten Abschnitt 42 stirnseitig verschließt, ist gemäß der zweiten Ausführung nach Fig. 5 über eine Verbindungsöffnung 51 mit dem zweiten Abschnitt 42 der Treibleitung 15 verbunden. Der weitere Abschnitt 50 der Treibleitung 15 ist beispielsweise stromab der Umlenkung 52 fluchtend zu dem zweiten Abschnitt der Treibleitung 15 angeordnet.

Abhängig davon, ob der Filterdeckel 28 gemäß der ersten Ausführung nach Fig.3 und Fig.4 oder der Filterdeckel 28 gemäß der zweiten Ausführung nach Fig. 5 verwendet wird, ergibt sich in der Vorrichtung eine andere Strömungsführung zur Saugstrahlpumpe 16, wobei jedoch zwischen dem Förderaggregat 3 und dem Filterausgang 30 und zwischen der Druckleitung 8 und der Saugstrahlpumpe 16 keine separaten Leitungen, beispielsweise Schläuche oder Wellrohre, notwendig sind. Dies vereinfacht die Montage erheblich, so dass die Montage- und Herstellungskosten deutlich verringert werden.

Die Ausbildung der Treibleitung 15 an dem Filtergehäuse 26 ist deshalb vorteilhaft, weil die Treibleitung 15 gemäß der ersten Ausführung stromauf des Filtergehäuses 26 und nach der zweiten Ausführung stromab des Filtergehäuses 26 abzweigt. Zur Umsetzung des Baukastenprinzips ist daher die Abzweigung der Treibleitung 15 von der Druckleitung 8 zur Saugstrahlpumpe 16 gemäß der ersten Ausführung an dem Filtertopf 27 und gemäß der zweiten Ausführung an dem Filterdeckel 28 vorgesehen. Beide Ausführungen nutzen jeweils den zweiten Abschnitt 42 der Treibleitung 15 am Filtertopf 27. In der zweiten Ausführung ist der erste Abschnitt 37 der Treibleitung 15 mittels der Schottwand 47 blind geschaltet und deshalb nicht genutzt. Statt über den ersten Abschnitt 37 strömt der Kraftstoff über den weiteren Abschnitt 50 in den zweiten Abschnitt 42 der Treibleitung 15.

## Patentansprüche

1. Vorrichtung zum Fördern von Kraftstoff aus einem Vorratsbehälter zu einer Brennkraftmaschine, mit einem Förderaggregat, einem stromab des Förderaggregates in einem Filtergehäuse angeordneten Hauptfilter und einer Treibleitung zum Antreiben einer Saugstrahlpumpe, **dadurch gekennzeichnet, dass** die Treibleitung (15) in dem Filtergehäuse (26) des Hauptfilters (10) einteilig integriert ist.

2. Vorrichtung nach Anspruch 1, **dadurch gekennzeichnet, dass** das Filtergehäuse (26) einen Filtertopf (27) und einen den Filtertopf (27) verschließenden Filterdeckel (28) aufweist, wobei die Treibleitung (15) an dem Filtertopf (27) und/oder an dem Filterdeckel (28) ausgebildet ist.

3. Vorrichtung nach Anspruch 2, **dadurch gekennzeichnet, dass** der Filtertopf (27) auf der dem Filterdeckel (28) zugewandten Stirnseite eine erste Schulter (40) und der Filterdeckel (28) auf der dem Filtertopf (27) zugewandten Stirnseite eine zweite Schulter (41) aufweist, wobei die erste Schulter (40) und die zweite Schulter (41) flanschartig aneinander liegen.

4. Vorrichtung nach Anspruch 3, **dadurch gekennzeichnet, dass** ein erster Abschnitt (37) der Treibleitung (15) in der ersten Schulter (40) des Filtertopfes (27) und/oder in der zweiten Schulter (41) des Filterdeckels (28) vorgesehen ist.

5. Vorrichtung nach Anspruch 4, **dadurch gekennzeichnet, dass** eine Druckleitung (8) vorgesehen ist, die von dem Förderaggregat (3) über ein Rückschlagventil (9) zu der Brennkraftmaschine (4) führt, wobei der erste Abschnitt (37) mit der Druckleitung (8) stromauf des Rückschlagventils (9) verbunden ist.

6. Vorrichtung nach Anspruch 5, **dadurch gekennzeichnet, dass** die Treibleitung (15) ein Drosselelement (21) und/oder einen weiteren Vorfilter (22) aufweist.

7. Vorrichtung nach Anspruch 3, **dadurch gekennzeichnet, dass** ein zweiter Abschnitt (42) der Treibleitung (15) am Filtertopf (27) vorgesehen ist, der von der ersten Schulter (40) des Filtertopfes (27) ausgehend in Richtung eines Topfbodens (31) des Filtertopfes (27) verläuft.

8. Vorrichtung nach Anspruch 3, **dadurch gekennzeichnet, dass** der Filterdeckel (28) einen weiteren Abschnitt (50) der Treibleitung (15) aufweist, der von einem stromab des Hauptfilters (10) angeordneten Druckregelventil (14) ausgehend mit dem zweiten Abschnitt (42) der Treibleitung (15) verbunden ist, wobei der erste Abschnitt (37) der Treibleitung (15) mittels einer Schottwand (47) gegenüber dem zweiten Abschnitt (42) dicht abgeschlossen ist.

9. Vorrichtung nach Anspruch 1, **dadurch gekennzeichnet, dass** das Förderaggregat (3) einen Ausgangsstutzen (7) aufweist, der in einen Filtereingang (24) des Filtergehäuses (26) hineinragt.

10. Vorrichtung nach Anspruch 9, **dadurch gekennzeichnet, dass** der Filtereingang (24) über eine Öffnung (38) mit der Treibleitung (15) strömungsverbunden ist.

## Claims

1. Device for delivering fuel from a storage tank to an internal combustion engine, having a delivery unit, having a main filter which is arranged downstream of the delivery unit in a filter housing, and having a drive line for driving a suction jet pump, **characterized in that** the drive line (15) is integrated in the filter housing (26) of the main filter (10) in a unipartite fashion.

2. Device according to Claim 1, **characterized in that** the filter housing (26) has a filter pot (27) and a filter cover (28) which closes off the filter pot (27), with the drive line (15) being formed on the filter pot (27) and/or on the filter cover (28).

3. Device according to Claim 2, **characterized in that** the filter pot (27) has a first shoulder (40) on the end side facing towards the filter cover (28), and the filter cover (28) has a second shoulder (41) on the end side facing towards the filter pot (27), with the first shoulder (40) and the second shoulder (41) bearing against one another in the manner of flanges.

4. Device according to Claim 3, **characterized in that** a first section (37) of the drive line (15) is provided in the first shoulder (40) of the filter pot (27) and/or in the second shoulder (41) of the filter cover (28).

5. Device according to Claim 4, **characterized in that** a pressure line (8) is provided which leads from the delivery unit (3) via a non-return valve (9) to the internal combustion engine (4), with the first section (37) being connected to the pressure line (8) upstream of the non-return valve (9).

6. Device according to Claim 5, **characterized in that** the drive line (15) has a throttle element (21) and/or a further pre-filter (22).

7. Device according to Claim 3, **characterized in that** a second section (42) of the drive line (15) is provided on the filter pot (27), which second section (42) runs, proceeding from the first shoulder (40) of the filter pot (27), in the direction of a pot base (31) of the filter pot (27) .

8. Device according to Claim 3, **characterized in that** the filter cover (28) has a further section (50) of the drive line (15), which further section (50) is connected, proceeding from a pressure regulating valve (14) arranged downstream of the main filter (10), to the second section (42) of the drive line (15), with the first section (37) of the drive line (15) being sealingly closed off with respect to the second section (42) by means of a bulkhead (47).

9. Device according to Claim 1, **characterized in that** the delivery unit (3) has an outlet connecting piece (7) which projects into a filter inlet (24) of the filter housing (26).

10. Device according to Claim 9, **characterized in that** the filter inlet (24) is flow-connected to the drive line (15) via an opening (38).

## Revendications

1. Dispositif pour fournir du carburant d'un réservoir à un moteur à combustion interne comportant une unité de pompage, un filtre principal installé dans un boîtier de filtre en aval de l'unité de pompage et une conduite d'entraînement pour entraîner une pompe aspirante à jets,
**caractérisé en ce que**
la conduite d'entraînement (15) est réalisée dans le boîtier (26) du filtre principal (10).

2. Dispositif pour fournir du carburant selon la revendication 1,
**caractérisé en ce que**
le boîtier de filtre (26) comporte un pot de filtre (27) et un couvercle (28) fermant le pot (27),
la conduite d'entraînement (15) étant réalisée dans le pot (27) et/ou dans le couvercle (28).

3. Dispositif pour fournir du carburant selon la revendication 2,
**caractérisé en ce que**
le pot de filtre (27) comporte, sur sa face tournée vers le couvercle de filtre (28), un premier épaulement (40°) et sur sa face tournée vers le pot de filtre (27) le couvercle (28) comporte un second épaulement (41), le premier épaulement (40) et le second épaulement (41) étant appliqués l'un contre l'autre comme une bride.

4. Dispositif pour fournir du carburant selon la revendication 3,
**caractérisé en ce qu'**
un premier segment (37) de la conduite d'entraînement (15) est prévu dans le premier épaulement (40) du pot de filtre (27) et/ou dans le second épaulement (41) du couvercle de filtre (28).

5. Dispositif pour fournir du carburant selon la revendication 4,
**caractérisé par**
une conduite de pression (8) reliant l'unité de pompage (3) par l'intermédiaire d'un clapet anti-retour (9) au moteur à combustion interne (4), le premier segment (37) étant relié à la conduite de pression (8) en amont du clapet anti-retour (9).

6. Dispositif pour fournir du carburant selon la revendication 5,
**caractérisé en ce que**
la conduite d'entraînement (15) comporte un élément d'étranglement (21) et/ ou un autre pré-filtre (22).

7. Dispositif pour fournir du carburant selon la revendication 3,
**caractérisé par**
un second segment (42) de la conduite d'entraînement (15), prévu sur le pot de filtre (27), ce second segment allant du premier épaulement (40) du pot de filtre (27) en direction du fond (31) du pot de filtre (27).

8. Dispositif pour fournir du carburant selon la revendication 3,
**caractérisé en ce que**
le couvercle de filtre (28) comporte un autre segment (50) de la conduite d'entraînement (15) qui, partant d'une vanne de réglage de pression (14) en aval du filtre principal (10) est relié au second segment (42) de la conduite d'entraînement (15), le premier segment (37) de la conduite d'entraînement (15) étant fermé de manière étanche par une cloison (47) par rapport au second segment (42).

9. Dispositif pour fournir du carburant selon la revendication 1,
**caractérisé en ce que**
l'unité de pompage (3) comporte un ajutage de sortie (7) pénétrant dans l'entrée (24) du boîtier de filtre (26).

10. Dispositif pour fournir du carburant selon la revendication 9,
**caractérisé en ce que**
l'entrée de filtre (24) est reliée par un orifice (38) à la conduite d'entraînement (15) dans le sens du passage du fluide.
